# EUROPEAN PATENT APPLICATION

(11) **EP 4 528 228 A1**
(43) Date of publication of application: **26.03.2025**
(21) Application number: 23306548.1
(22) Date of filing: 19.09.2023
(51) Int. Cl.: G01D 5/353, G01H 9/00, H04B 10/291

(54) **AN INTERROGATOR FOR DISTRIBUTED OPTICAL FIBER SENSING WITH VARIABLE OPTICAL LOAD SOURCES**

(71) Applicant: Alcatel Submarine Networks, 91620 Nozay (FR)
(72) Inventor: RONNEKLEIV, Erlend, 7052 Trondheim (NO); BRENNE, Jan Kristoffer, 7048 Trondheim (NO); TOLSTIK, Nikolai, 7071 Trondheim (NO); SORGARD, Trygve, 7075 Tiller (NO); KLIMENTOV, Dmitry, 7224 Melhus (NO)
(74) Representative: Loyer & Abello

(57) **Abstract**

An apparatus for distributed optical sensing includes an optical transmitter, an optical receiver, and two sources of load light to transmit temporally varying load light. The optical transmitter is connected to transmit probe light to the same optical output as the sources of load light, such that the temporally varying load light from the first load light source occupies a wavelength range on an opposite side of a wavelength range of the optical probe light as the temporally varying load light from the second load light source.

## Description

### TECHNICAL FIELD

The present disclosure relates to distributed optical sensing and apparatus for use therein.

### BACKGROUND

Optical fibers can be used as distributed sensors. In a typical implementation, an optical interrogating device sends a sequence of suitably prepared optical probe pulses into an optical fiber and measures parts of the optical pulses that are returned back to the interrogator by reflectors distributed along the optical fiber The reflectors are typically either approximately randomly formed during fabrication of the optical fiber (e.g. causing Raleigh scattering) or are intentionally formed therein (e.g. fiber Bragg gratins, "FBGs"). Applications of such sensors include but are not limited to detection and/or mapping of ambient disturbances, such as naturally occurring or man-induced mechanical vibrations, temperature and/or pressure variations, etc., both in marine and terrestrial environments. Example marine applications relate to monitoring of submarine, power, and telecom cables. European patent application EP4160941, entitled "Distributed Sensing and Monitoring Using Amplified Optical Links", describes distributed sensing along an amplified multi-span optical fiber link by providing wavelength-selective optical loopback paths in the optical repeaters thereof.

### SUMMARY OF SOME SPECIFIC EMBODIMENTS

An aspect of the present disclosure provides an apparatus. The apparatus comprises an optical interrogator for distributed optical fiber sensing comprising an optical transmitter, an optical receiver, and first and second load light sources. The load light sources are connected to transmit temporally varying load light to an optical output of the optical interrogator. The optical transmitter is connected to transmit probe light to the same optical output such that the temporally varying load light from the first load light source occupies a wavelength range on an opposite side of a wavelength range of the optical probe light as the temporally varying load light from the second load light source. Wavelengths of the temporally varying load light are in an amplification range for rare-earth doped amplifiers.

### BRIEF DESCRIPTION OF THE DRAWINGS

Embodiments disclosed herein will be described in greater detail with reference to the accompanying drawings which represent example embodiments thereof, in which like elements are indicated with like reference numerals, and wherein:
FIG. 1 is a schematic block diagram of an optical interrogating apparatus for distributed optical fiber sensing using multiple load channels;
FIG. 2 is a diagram illustrating an example evolution of an output optical spectrum of the optical interrogating apparatus of FIG. 1;
FIG. 3 is a schematic block diagram of a multi-channel implementation of the optical interrogating apparatus of FIG. 1;
FIG. 4 is a schematic block diagram of a single-channel optical interrogator that may be used in embodiments of the apparatus of FIG. 3;
FIG. 5 is a schematic block diagram of an amplified multi-segment optical fiber system using the apparatus of FIG. 1 or FIG. 3 according to a first example;
FIGs. 6A-6D are schematic block diagrams illustrating example implementations of wavelength-selective add-optical-couplers for collecting back-scattered light from different segments of the multi-segment optical fiber system of FIG. 5;
FIG. 7 is a schematic block diagram of a multi-segment optical fiber system using the apparatus of FIG. 1 or FIG. 3 according to a second example;
FIGs. 8A and 8B are graphs illustrating example time division multiplexing schemes to interrogate a multi-segment optical fiber system using different wavelength channels.
FIG. 9A is a graph illustrating an example sequence of optical probe pulses of different center wavelengths that may be generated by the apparatus of FIG. 1 or FIG. 3 for interrogating a 16-span optical fiber system;
FIG. 9B is a graph illustrating an example modulation of the load light channels accompanying the train of optical probe pulses of FIG. 9A;
FIG. 10A is a graph illustrating a time-averaged optical spectrum at an input of a forward-path optical amplifier of the 16-span optical fiber system corresponding to the example of FIGs. 9A and 9B;
FIG. 10B is a graph illustrating an evolution of the time-averaged optical spectrum of FIG. 10A at an input of a return-path optical amplifier of the 16-span optical fiber;
FIG. 11 is a graph illustrating temporal evolution of expected back-scattering response of the 16-span optical fiber system to the train of optical probe pulses of FIG. 9A;
FIG. 12 is a schematic block diagram illustrating a part of an optical loop-back path of FIG. 2 with a load light bypass.

### DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits may be omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future.

Note that as used herein, the terms "first", "second" and so forth are not intended to imply sequential ordering, but rather are intended to distinguish one element from another, unless explicitly stated. Similarly, ordering of method steps does not imply a requirement of sequential order of their execution, unless explicitly stated. The term "connected" may encompass direct connections or indirect connections through intermediate elements, unless explicitly stated otherwise.

The following abbreviations and acronyms may be used in the present document:
- "ASE": amplified spontaneous emission
- "ADC": analog to digital converter
- "AOM": acousto-optic modulator
- "CI": channel interrogator
- "DAC": digital to analog converter
- "DAS": distributed acoustic sensing
- "DOFS": distributed optical fiber sensing
- "EDFA": erbium doped fiber amplifier
- "FWM": four-wave mixing
- "OA": optical amplifier
- "OFA": optical fiber amplifier
- "OFI": optical fiber interrogator
- "OFS": optical fiber segment
- "OM": optical modulator
- "SOA": semiconductor optical modulator
- "OTDR": optical time domain reflectometer
- "SNR": signal-to-noise ratio
- "OSNR": optical signal-to-noise ratio
- "SPM": self-phase modulation
- "XPM": cross-phase modulation
- "XPolM": cross-polarization modulation

Various embodiments described below relate to an apparatus, and a corresponding method, for distributed optical sensing along a multi-span optical fiber line using a series of wavelength-selective loopbacks. The multi-span optical fiber line may include optical amplifiers connecting different spans thereof. The apparatus may be configured to use a train of probe pulses of different wavelengths to interrogate different spans of the optical fiber line, and to further use correspondingly modulated load light to suitably load the amplifiers.

Various aspects of the apparatus, system, and method described herein may be useful for distributed optical fiber sensing along relatively long optical fiber lines that use multiple optical fiber amplifiers (OFAs), such as rare-earth doped OF As s, e.g., erbium-doped OF As, and/or Raman amplifiers, to compensate for optical loss in each optical fiber span or segment thereof. The distributed optical fiber sensing operates by transmitting interrogating, or probe, optical signals along the optical fiber line and analyzing resulting back-scattered light, e.g. due to the Raleigh back-scattering on random imperfections in optical fibers. Since light transmitted in long fibers is attenuated to levels that decrease exponentially with the fiber distance, and also because only a small portion of light propagating along an optical fiber typically gets back-scattered at any location in the fiber, extending the reach of a distributed optical fiber sensing along an optical fiber line may require the use of multiple OF As located therealong.

E.g. the apparatus for extending the range of DOFS described in the European patent application EP4160941 includes a multi-segment out-bound optical fiber line configured for optical sensing therealong, with the back-scattered response optical signal from each span being transmitted back to the apparatus over a return optical fiber line, each of the out-bound and return optical fiber lines including a sequence of OF As for extending the sensing reach of the system.

The use of OF As in a multi-span optical fiber system being optically interrogated may however result in several complications. Some of these complications relate to the time dynamics of the OFAs, e.g. erbium-doped fiber amplifiers (EDFAs), which may respond to changes in the input optical signal by causing spikes and ripples in the amplified transmitted light. Other potential complications relate to the low levels of the Rayleigh scattered response at the input of the return transmission line causing a poor OSNR (optical signal to noise ratio) with the noise typically being the amplified spontaneous emission (ASE) at the receiver side after accumulation of ASE from many return-path optical amplifiers.

Furthermore, there are limitations related to distortion of optical signals in both the outbound and return optical lines due to optical non-linearities, such as the Kerr non-linearity that causes an optical signal that travels through a fiber to acquire a power dependent optical phase. The non-linear phase shift of the optical signal that is caused by the signal itself is called self-phase modulation (SPM). The phase shift that is caused by optical signals at other frequencies is called cross-phase modulation (XPM). If the other, co-propagating optical signal is not polarized exactly parallel or orthogonal to the affected signal, the polarization of the probe signal will be modulated through so-called cross-polarization modulation (XPolM). The intensity beating between optical probe signals at three optical frequencies (of which two could be identical) will cause mixing products at various fourth frequencies that are sum-difference combination of the three mixing optical frequencies, with the corresponding effect being referred to as the four-wave mixing (FWM). Fiber dispersion may moderate the effects of Kerr nonlinearity, especially when the interacting frequencies are far apart. On the other hand, if the peak optical power within a channel becomes high, the interplay between the Kerr modulation and the dispersion may distort the signal severely, with the corresponding distortion referred to as modulation instability (MI).

The accumulation of non-linear distortion of the interrogating optical signal may become significant when propagating through a long chain of OF As and transmission fibers. Furthermore, some of the non-linear effects described above may couple the OFA-induced optical power transients into the optical phase of the back-reflected signal being sensed, which would further complicate the sensing.

An aspect of the present disclosure provides an apparatus for distributed optical fiber sensing along a multi-span amplified optical fiber line, which may allow overcoming or at least mitigating one or more of the complications related to OFA's dynamics and non-linear signal distortion. The apparatus comprises a device for distributed optical fiber sensing comprising an optical transmitter, an optical receiver, and first and second load light sources. The load light sources are connected to transmit temporally varying load light to an optical output of the device. The optical transmitter is connected to transmit probe light to the same optical output such that the temporally varying load light from the first load light source occupies a wavelength range on an opposite side of a wavelength range of the optical probe light as the temporally varying load light from the second load light source. Wavelengths of the temporally varying load light are in an amplification range for rare-earth doped amplifiers.

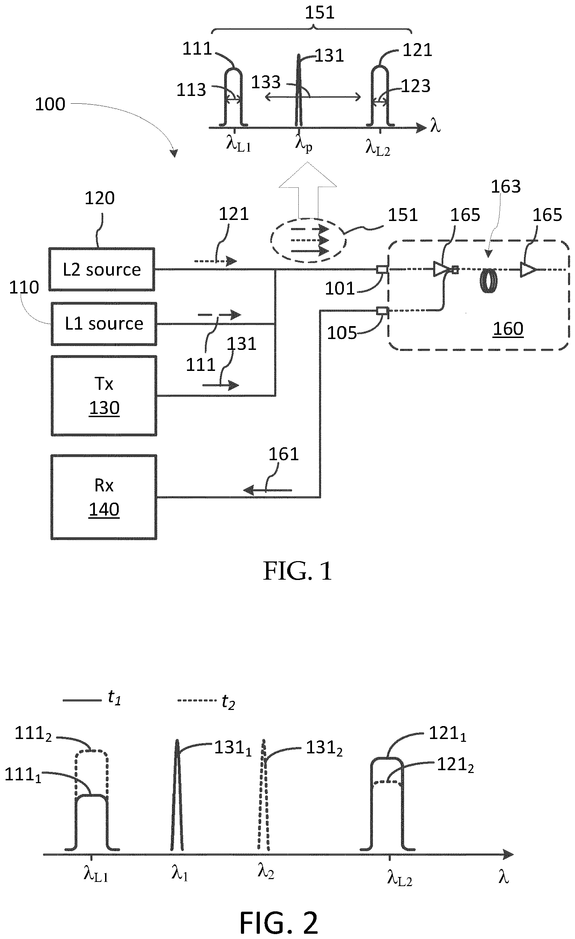

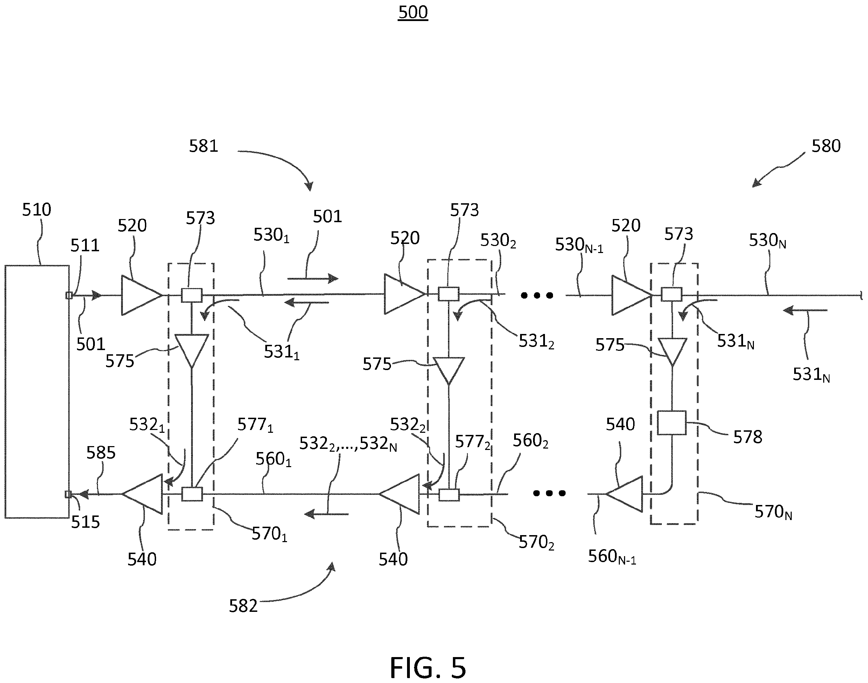

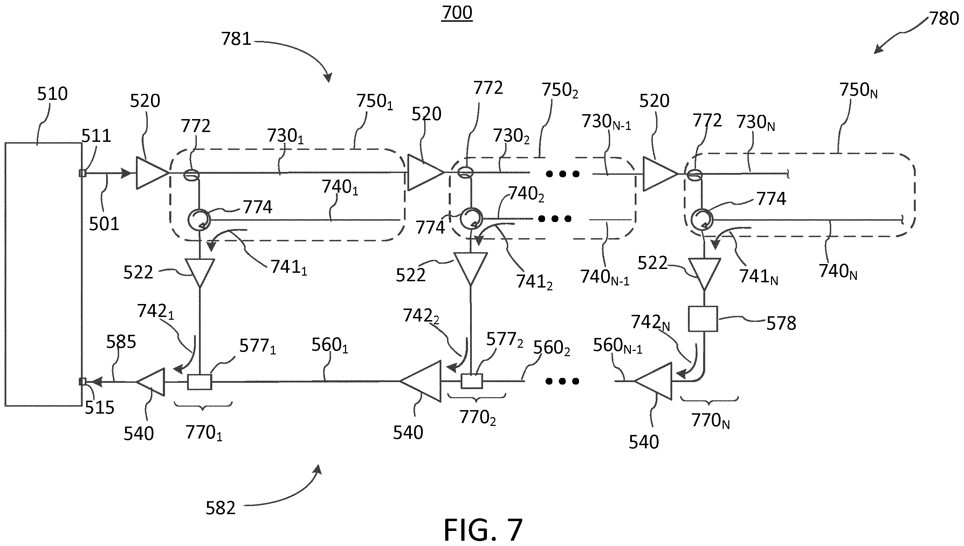

FIG. 1 illustrates an interrogating apparatus 100 for distributed optical fiber sensing ("apparatus 100"). The apparatus 100 may be used, e.g., for detecting vibrations and/or changes in environmental conditions along an optical fiber (OF) line 163 of an optical system 160 ("system 160"). The OF line 163 of the optical system 160 may include serially connected optical amplifiers (OAs) 165, e.g. rear-earth OF As; examples of such systems include amplified multi-span optical fiber lines such as the cable systems described in the European patent application EP4160941, or optical fiber systems illustrated in FIGs. 5 and 7.

In an example embodiment, the apparatus 100 is configured to perform distributed optical fiber sensing (DOFS), e.g., distributed acoustic sensing (DAS) measurements, using optical probe signals 131 ("probe light 131"). In some embodiments, the apparatus 100 may be configured to perform OTDR measurements and/or interferometric measurements, e.g., as known in the pertinent art. In some embodiments, the apparatus 100 may additionally or alternatively be configured to perform other types of DOFS, such as distributed temperature sensing (DTS), distributed strain sensing (DSS), and distributed temperature, strain sensing (DTSS), and/or estimate the distance to acoustic or vibrational events along the optical fiber line 163.

The apparatus 100 includes an optical transmitter (Tx) 130 connected to transmit probe light 131 to an optical output 101, and an optical receiver 140 for receiving return light 161 via an optical input 105. The apparatus 100 further includes two sources of load light, i.e. a first source ("L1 source") 110 and a second source ("L2 source") 120, which outputs are connected to the same optical output 101 of the apparatus 100. The L1 and L2 sources are configured to transmit first temporally varying load light 111 and second temporally varying load light 121, respectively, so that the probe light 131 is spectrally between the first and second load light 111, 121. Output light 151 of the apparatus 100 thus combines the optical probe signals 131, the first load light 111, and the second load light 121. In operation, the output light 151 of the apparatus 100 is launched into the OF line 163 and propagates in optical fibers thereof, experiencing back reflections along the way, e.g. due to Rayleigh scattering on built-in density and composition fluctuations in the core and/or cladding of the optical fibers thereof.

The return light 161 comprises parts of the optical probe signals 131 that experienced back-reflections at different locations along an optical path of the light 151 in the system 160. The optical receiver 140 performs measurements on the return light 161 to detect changes therein indicative of environmental disturbances along the OF line 163, e.g. by extracting from the return light 161 acoustic and vibrational sensing information, time of flight information, and/or temperature or pressure sensing information in some embodiments.

The probe light 131 may vary in power and wavelength; the OAs 165 of the system 160 may respond to these variations by causing transients, such as spikes and ripples, in the light power emerging from the OAs 165; these transients may obscure changes in the return light caused, e.g., by environmental disturbances along the OF line 163 of the system 160, thereby complicating the sensing at the optical receiver 140. The load light sources 110, 120 may be configured to vary the load light 111, 121 so as to stabilize the OA gain experienced by the probe light 131 in propagation along the system 160.

E.g., in an example embodiment the probe light 131 is pulsed. The pump power of the OAs 165 is typically constant. In the absence of the load light, an OA 165 may store a large amount of energy between the probe pulses, causing large spikes and ripples in the probe light 131 downstream of the OA. The amplitude of these spikes and ripple may increase after passing through subsequent OAs, e.g. in a repeatered, multi-span optical fiber line. Severe spiking may also lead to nonlinear signal degradation through SPM, and possibly also through other non-linear effects such as e.g., modulation instability and/or stimulated Brillouin back scattering. The OA-induced amplitude fluctuations may cause phase modulation of the optical probe signal via Kerr nonlinearities in the optical fiber, with a corresponding deterioration of the return optical signal 161. As a result, the sensitivity of the apparatus 100 to environmental disturbances, e.g. vibrations and acoustic waves, along the system 160 may be reduced.

The OA-induced spiking may be reduced by loading the OAs with light of a different wavelength range than the probe light, and varying the optical power of the load light in antiphase with the probe light. However, the spiking may be difficult to sufficiently suppress if the probe and load wavelengths are far from each other, since the OA may react differently to light of different wavelengths. The difficulty may increase if the optical probe signal can vary in wavelength in a range that is comparable to, e.g. more than a third of, the gain bandwidth of the OA.

The apparatus 100 is configured to reduce the distortion of the return light 161 due to the OA-induced transients by adding the load light 111, 121 at both sides of the probe light spectrum, and temporally varying said load light responsive to variations of the probe light 131, e.g. in a manner complementary thereto. In an embodiment, the load light sources 110, 120 are configured to temporally vary the optical power of the load light 111, 121 to at least partially stabilize the gain of the OAs 165 in the system 160 during the sensing.

As schematically illustrated in a top insert of FIG. 1, the temporally varying load light 111 from the L1 source 110 and the temporally varying load light 121 from the L2 source 120 occupy wavelength ranges, e.g. 113 and 123, respectively, on opposite sides of a wavelength range 133 for the probe light 131. The wavelength ranges 113 and 123 define the first and second load channels, respectively, of the apparatus 100. In an example embodiment, central wavelengths λ_{L1}, λ_{L2} of the temporally varying load light 111, 121 are within an amplification range for rare-earth doped optical fiber amplifiers. By modulating the load light 111 and/or 121 complementary to the probe light 131, i.e. in counter-phase therewith, the optical gain experienced by the probe light 131 in the OAs 165 may be partially stabilized, and the spiking in the optical power thereof past the OA(s) 165 reduced.

The optical transmitter 130 may be configured to shift the central wavelength of the probe light 131 during measurement, e.g. to probe different parts of the system 160 at different wavelengths. The optical receiver 140 may then be configured to perform measurements on the parts of the return light 161 separately for the different wavelengths, e.g. to extract acoustic and/or vibrational sensing information, or other sensing information, specific to the different parts.

The apparatus 100 may be configured to temporally vary the relative intensity of the load light 121 and 122 as the wavelength of the probe light 131 shifts, so as to at least reduce the undesired effects of the wavelength change on a temporal intensity profile of the probe light 131 as it propagates through the OA(s) 165 in the system 160. The power P_{L1} and P_{L2} of the first and second load light 111 and 121, respectively, may be varied with time such that the OA gain compensates for loss in the corresponding transmission span for the probe light and both load lights at all times while the probe light 131 is being transmitted. In this way the shape of all signals can be preserved through the sequence of OAs and optical fiber transmission spans. When the center wavelength of the probe light 131 changes, e.g., from λₙ₁ to λₙ₂, the ratio *R* = P_{L1}/P_{L2} of the optical power P_{L1} of the first load light 111 to the optical power P_{L2} of the second load light 121, and in some cases their total optical power (P_{L1}+P_{L2}), is changed so that the OA gain at the new central wavelength λη₂ is approximately equal to the OA gain at the central wavelength λₙ₁ before the change.

Referring to FIG. 2 by way of example, in operation the optical transmitter 130 may at a time instance t₁ generate a probe light 131₁ centered at a wavelength λ₁, and at a time instance t₂ generate a probe light 131₂ centered at a wavelength λ₂ > λ₁, i.e. farther away in spectrum from the first load channel and closer to the second load channel 123. As the wavelength of the probe light 131 changes, the load sources 110, 120 may synchronously adjust their optical powers to maintain the gain for the probe light 131 in the OA(s) 165 to be approximately constant. In the illustrated example, the average optical power of the first load light 111 at the lower-wavelength edge is increased from a level 111₁ at a time instance t₁ to a higher level 111₂ at a time instance t₂, while the average optical power of the second load light 121 at the higher-wavelength edge is decreased from a level 121₁ at the time instance t₁ to a lower level 121₂ at the time instance t₂.

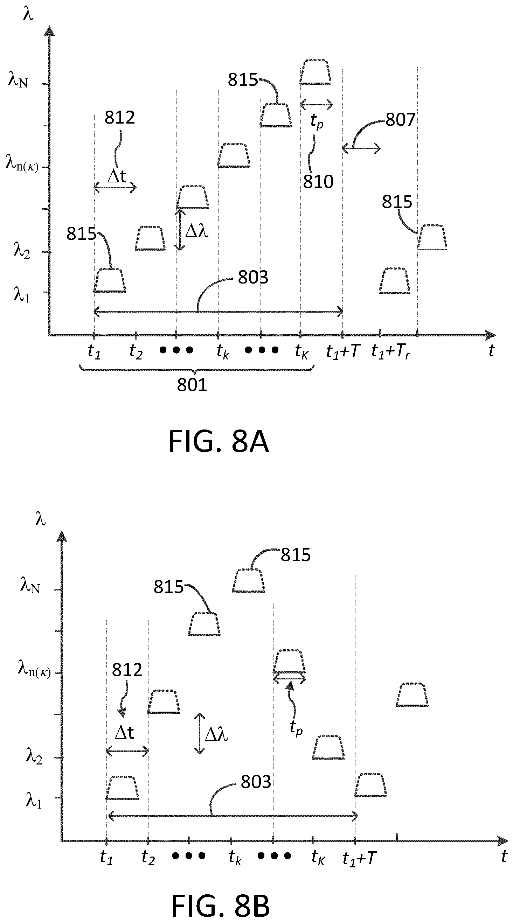

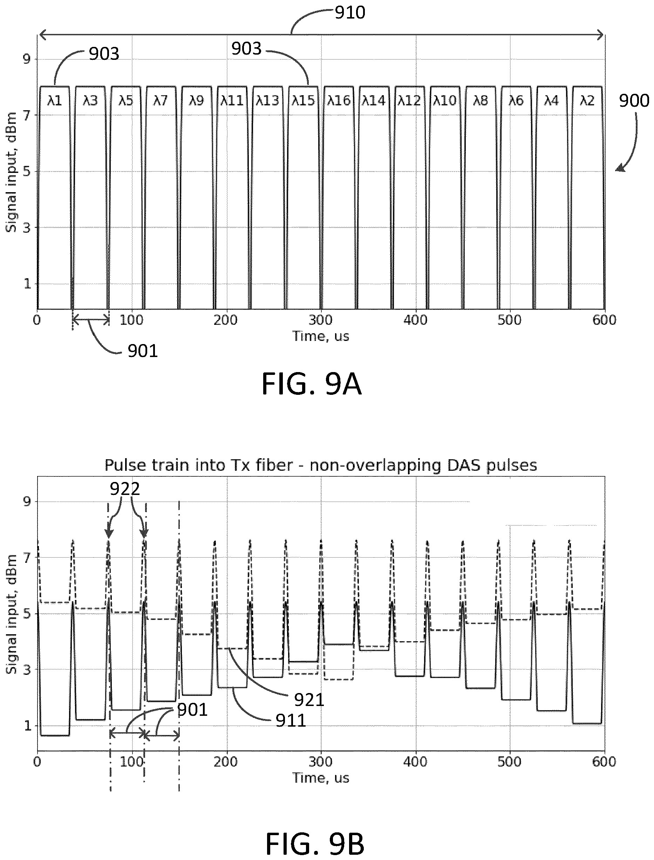

In an example embodiment, the optical transmitter 130 is configured to transmit the optical probe signals of the probe light 131 at a temporal sequence of start times *tₖ =* (*t*₀+Δ*t·k*) , *k* =1,... *N, N* ≥2, such that a center wavelength *λₖ* of the probe light is different for *N* optical probe signals transmitted at different ones of the start times *tₖ*, e.g. as described below with reference to FIGs. 8A and 9A. In at least some embodiments, the start times *tₖ* are equally spaced in time by a delay time Δ*t*, so that *N* optical probe signals are transmitted over a transmission period of *T*=Δ*t·N.* In some embodiments, a transmission duration *tₚ* of each optical probe signal (e.g. 810, FIG. 8A) at a particular center wavelength is equal or, preferably, somewhat smaller than the Δ*t*, i.e. *tₚ ≤* Δ*t*, to avoid non-linear interactions between the optical probe signals of different wavelength, such as the FWM, as the probe signals propagate along an optical fiber line. In some embodiments, the optical probe signals transmitted at consecutive start times may overlap at the edges. The spectral bandwidth of the probe light 131 transmitted at each center wavelength is typically much smaller, e.g. by a factor of 10 or more, than a wavelength spacing Δλ between adjacent ones of the center wavelengths. In such embodiment, the optical transmitter 130 is configured to transmit a temporally-ordered sets of *N* ≥2 optical probe signals transmitted in corresponding ones of *N* spectrally-separate wavelength channels having the center wavelengths *λₖ*, *k*=1,..., *N.* In operation, the optical transmitter 130 may repeatedly transmit the set of *N* optical probe signals with a repeat period *Tᵣ≥ T,* each set transmitted over the *N* wavelength channels. In some embodiments, the number of different wavelength channels at the output of the optical transmitter 130 may be at least equal to the number of different optical fibers to interrogate, typically in a range from about 5 to about 20. In some embodiments, optical probe signals of a same wavelength channel may be used to interrogate two or more different optical fibers.

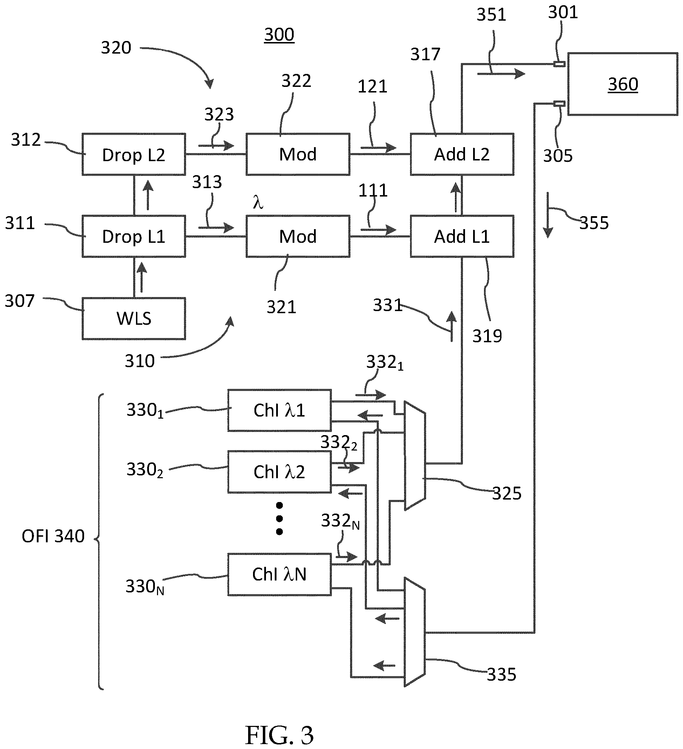

FIG. 3 illustrates an example implementation 300 of the apparatus 100 of FIG. 1, which is referred to herein as apparatus 300. In this implementation, first and second load light sources 310, 320 are embodiments of the load light sources 110, 120 of the apparatus 100, and are implemented using a common source of white light 307 followed by a corresponding passband drop filters, 311 or 312, and corresponding optical modulators (OMs), 321 or 322, respectively. The first drop filter 311 is configured to extract light 313 of a first wavelength range, e.g. 113 in FIG. 1; the extracted wavelengths are directed to a first OM 321, which outputs the temporally varying first load light 111. The rest of the white light is passed to the second passband filter 312, which is configured to extract therefrom light 323 of a second wavelength range, e.g. 123 in FIG. 1, and to direct the second extracted wavelengths to a second OM 322, which outputs the temporally varying second load light 121. Each of the first and second OMs 321, 322 may be implemented, e.g., as a semiconductor optical amplifier (SOA), conveniently combining optical modulation and amplification functions; other suitable optical modulators, such as but not limited to, e.g., acousto-optic modulators (AOMs), may also be used.

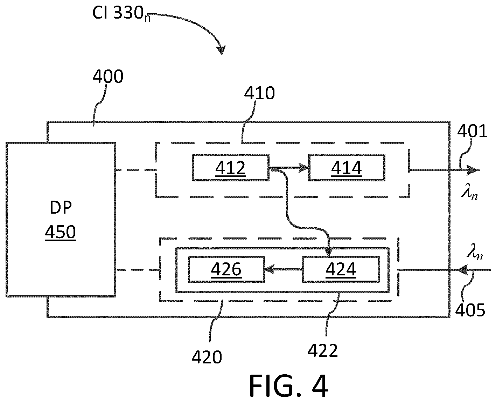

The apparatus 300 further includes a multi-channel optical fiber interrogator (OFI) 340 that includes a plurality of *N ≥* 2 channel interrogators (CIs) 330₁, ..., 330*_{N}*, generally referred to herein as CIs 330. Each of the CIs 330 includes an optical transmitter (e.g. 410, FIG. 4) and an optical receiver (e.g. 420, FIG. 4). Optical outputs of the CIs 330 connect to an optical wavelength multiplexer (MUX) 325, while optical inputs of the CIs 330 connect to an optical wavelength demultiplexer (DMUX) 326, as indicated in FIG. 3. The OFI 340 embody the optical transmitter 130 and the optical receiver 140 of the apparatus 100, with the respective optical transmitters and optical receivers of the *N* CIs 330 together embodying the optical transmitter 130 and the optical receiver 140 of the apparatus 100, respectively. The CIs 330*ₙ*, *n* are configured to operate at corresponding different center wavelengths λ*ₙ*, = 1,..., *N,* for interrogating optical fibers in *N* spectrally-separate wavelength channels ("probe channels") *Cₙ*, using optical probe signals at the center wavelength *λₙ* , *n* = 1, ..., *N.* The center wavelengths *λₙ* , *n* = *1, ..., N,* may also be referred to herein as the probe channel wavelengths. In an example embodiment, each of the CIs 330*ₙ* is configured to perform DOFS, e.g., DAS, measurements using optical probe signals of a corresponding probe wavelength channel Cₙ.

In operation, the CIs 330*ₙ* generate optical probe signals 332ₙ of the corresponding probe channels *Cₙ*, e.g. sequences of suitably shaped optical pulses at respective center wavelengths λ₁, ..., λ*_{N}*. In the illustrated example, each of the optical probe signals 332*ₙ*, which are generated by the corresponding CIs 330*ₙ* at corresponding ones of the channel center wavelengths λ₁, ..., λ*_{N}*, is a suitably configured optical pulse. Each of the CIs 330ₙ repeatedly transmits this pulse, or a frequency-offset version thereof, with a same repeat period *Tᵣ* within a corresponding wavelength channel. In some embodiments, each of the optical probe signals 332ₙ may be a group of two or more consecutive optical pulses repeatedly transmitted with the repeat period *Tᵣ.* In some of such embodiments, individual pulses of the group may somewhat differ in the center frequency thereof within the bandwidth of the corresponding wavelength channels. The CIs 330*ₙ* may time-synchronize to transmit different ones of the optical probe signals 332*ₙ* in a time interleaved fashion, so that the output probe light 331 includes a sequence of *N* optical probe signals of different center wavelengths within the transmission time period T. In some embodiments, the optical probe signals 332ₙ are time-multiplexed so that each CI 330*ₙ* transmits an optical probe signal, e.g. an optical pulse or a group of optical pulses, at a corresponding one of the start times *tₖ*, in a specified order.

Optical signals transmitted by the CIs 332ₙ are wavelength-multiplexed by the MUX 325 to obtain an optical probe signal ("probe light") 331, which is directed to an optical output 301 of the apparatus 300. Along the way, the probe light 331 is combined with the L1 light 111 and the L2 light 121, e.g. using add couplers 317 and 319, to form output light 351 of the apparatus 300. The probe light 331, the L1 light 111, and the L2 light 121 are spectrally separate from each other, so that each of the add couplers 317, 319 may be implemented with a suitable wavelength multiplexer. In an embodiment, all of the center wavelengths λ₁, ..., λ_{N} are within some wavelength range 133 between the wavelength range 113 of the L1 light 111 and the wavelength range 123 of the L2 light, as illustrated in the top insert of FIG. 1.

In a typical embodiment, optical frequencies *vₙ*= c/λₙ corresponding to the center wavelengths λₙ of the probe channels *Cₙ*, *n* = 1,..., *N*, may lie close to the center frequencies of a uniform, i.e. equally-spaced (periodic), optical frequency grid with a same optical frequency spacing Δv between adjacent optical frequencies *vₙ*. In some embodiments, the optical frequencies *vₙ* may lie on a non-uniformly spaced frequency grid or a flexible frequency grid. The bandwidth *B*_{C} of ach probe channel *Cₙ* is defined by a frequency content of the optical probe signals in each probe channel and is much smaller than the inter-channel spacing Δv. By way of example, *B*_{C} is limited by the speed of used electronic components and optoelectronic components, e.g. ADC and optical modulators, and may be in a 10 MHz to 2 GHz range, 10 to 500 MHz range typically, e.g. about 80 MHz. The channel spacing Δv may be in the ~50GHz to ~500 GHz range typically. The frequency bandwidths of the load light 111, 121 is larger than the bandwidth of the probe light 131 at each center wavelength, and preferably at least as large as the frequency spacing Δv between spectrally-adjacent probe channels. By way of example, the optical frequencies *vₙ* may lie close to the center frequencies of an ITU frequency grid.

In a typical operation, the output light 351 is launched into an optical system 360, which may be an embodiment of the optical fiber system 160 and includes an amplified multi-span fiber line. Examples of the system 360 are described herein below with reference to FIGs. 5 (system 580) and FIG. 7 (system 780). The optical probe signals of different center wavelengths cause the optical system 360 to generate corresponding optical response signals of the same wavelengths travelling in the return direction, which are received at an optical input 305 of the apparatus 300 as a returned optical signal 355. In the apparatus 200, these optical response signals are wavelength-demultiplexed by the DMUX 335 into *N* demultiplexed returned signals at the corresponding center wavelengths λ₁ to λ*_{N}* , which are sent to the respective CIs 330₁ - 330*_{N}*. Each of the CIs 330₁ - 330*_{N}* then operates to detect and process the respective received optical response signal, e.g., as known in the pertinent art, to obtain therefrom information related to some aspect(s) of a current state of the system 360 or surroundings thereof, e.g. acoustic and/or vibrational sensing information.

FIG. 4 shows a schematic block diagram of an example channel interrogator 400 ("CI 400"), which may embody any of the CIs 330*ₙ* of the apparatus 300. The CI 400 includes an optical transmitter 410 configured to transmit suitably shaped optical probe pulses at a central wavelength λ*ₙ*, e.g. as may be used to interrogate an optical fiber line. The CI 400 further includes an optical receiver 420 configured to receive parts of the pulses returned by the system being interrogated and to perform measurements thereon, e.g. DAS measurements typically including measurements of temporal variations of an optical phase of the received back-scattered light. Results of the measurements are provided to a digital processor 450 to obtain optical fiber sensing information therefrom, e.g. using techniques known in a pertinent art. The processor 450 may also be used to control the optical transmitter 410 of the CI 400. In a system comprising a plurality of the CIs 400 operating at different center wavelengths λ*ₙ*, *n* = 1,..., *N*, such as e.g. the apparatus 300, the processor 450 may be shared with some or all of the CIs used in the system.

In an example embodiment, the optical transmitter 410 comprises a laser 412 that is followed by an optical modulator 414, e.g. an AOM, and an optional optical amplifier (not explicitly shown). The optical modulator 614, e.g. an acoustic optical modulator (AOM), is controlled by the digital processor 650 via a suitable driver (not explicitly shown) to apply a desired modulation signal to the laser light to generate a sequence of optical probe pulses.

In some embodiments the optical probe signal 401 at the output of the OM 414 is a sequence of optical probe pulses that are about 5µs to 50 µs long. The pulses may be frequency-modulated ("frequency-chirped"), which enables signal compression at the receiver as known in the art. E.g., the processor may 450 may operate the OM 414 to monotonically shift ("sweep") the output light in frequency over the duration of each pulse in accordance with a complex modulation function *h*(*t*)*.* By way of example, the amount of frequency shift may typically be, e.g. in a range from 5 to 200 MHz over a duration of each pulse. In some embodiments, the pulses may be linearly frequency modulated, i.e. with the chirp rate dv/dt constant over the pulse duration; here *v* = d*φ*/d*t*/*2π* is the instantaneous optical frequency, *φ* denoting the optical phase and *t* denoting the time. In some embodiments, the probe pulses may be suitably apodized, i.e. with desired durations of the rising and falling edges thereof. In some embodiments, e.g. wherein probe pulses transmitted in different wavelength channels overlap at the edges, the duration of each of the rising and falling edges of each pulse may be less than 2µsec, or preferably about or less than 0.2 µsec. In some embodiments, the chirp rate may vary over the duration of a pulse; e.g. the chirp rate at the pulse edges may be greater than in a middle portion of the pulse. E.g. the chirp rate may gradually decrease toward the center of the pulse. Non-linearly varying ("sweeping') the optical frequency in this manner may contribute to suppressing compressed-signal side-lobes at the receiver. Techniques for generating frequency-chirped pulses using optical modulators, such as e.g. AOM or interferometer-based, are well known in the art.

The optical probe signals 401 from an output of the optical transmitter 410 may be sent to a MUX, such as e.g. the MUX 325 of the apparatus 300, to be wavelength-multiplexed with corresponding outputs of other instances of the CI 400 centered at a different wavelength, e.g. as described above with reference to FIG. 3.

The optical receiver 420 may include an opto-electric (OE) converter 422 followed by an analog-to-digital converter (ADC) (not explicitly shown) that connects to the processor 450. The optical receiver 420 may be a coherent optical receiver adapted to make phase-sensitive measurements of the received light, with the processor 450 configured to extract relevant optical phase and/or amplitude information from the measurements. The OE converter 422 may include an optical mixer 424, such as e.g. a dual-polarization 90° optical hybrid, to coherently mix the received light with local oscillator light sourced from an output of the laser 412, e.g. separately in two orthogonal polarizations, as known in the art. The output(s) of the optical mixer 424 connect to a photodetector circuit 426, which includes one or more photodetectors, e.g. one or more photodiode pairs connected for balanced and/or differential detecting (not explicitly shown), typically followed by one or more trans-impedance amplifiers ("TIAs", not explicitly shown). Electrical signals generated by the photodetector circuit 426 are converted into one or more streams of digital samples and processed in the processor 450 using a suitable signal-processing algorithm to obtain, e.g., acoustic, vibrational, and/or other sensing data along the optical system being tested, e.g. the optical system 360 of FIG. 3. In various embodiments, such sensing data may be used to detect the presence of mechanical vibrations, fiber faults, localized strain, localized temperature excursions, etc, and/or the location of such environmental events along the optical fiber line.

In some embodiments, e.g. wherein the optical probe signal 401 generated by the transmitter 410 includes frequency-chirped optical pulses, the digital processor 450 may be configured to process the received streams of digital samples using a matched-filter technique. E.g. the processor 450 may be configured to obtain a down-converted complex digital representation of the optical field of the received back-scattered light, and compute a convolution of said digital representation with a matched-filter impulse response to obtain a back-scattering response of a corresponding optical fiber. The matched-filter impulse response, *h**(-*t*)*,* is a complex conjugate of the complex modulation *h*(*t*) applied to the transmitted optical probe signal. E.g. the processor 450 may be configured to use the well-known "overlap-save" FFT-based convolution algorithm to perform the matched-filter digital signal processing. Techniques to transmit frequency-chirped pulses and to process back scattered signals using filters matched to the transmitted pulses are known in the art..

FIG. 5 illustrates a distributed optical fiber sensing (DOFS) system 500 ("system 500") including an interrogating apparatus 510 and an optical fiber (OF) system 580. The interrogating apparatus 510 is connected to the OF system 580 to launch interrogation light 501 therein via an optical output 511, and to receive therefrom a response optical signal 585 via an optical input 515. The response optical signal 585 may also be referred to herein as the return light 585. The optical fiber system 580 may be, e.g., as described in the European patent application EP4160941, or a variation thereof. The optical fiber system 580 includes an outbound optical fiber line ("OF line") 581 comprised of a sequence of *N* optical fiber segments (OFSs) 530ₙ, *n* =1,..., *N*. Adjacent ones of the OFSs 530*ₙ* are end-connected via optical amplifiers (OAs) 520. The OAs 520 may be individually adapted to an optical power expected at the input thereof. The number *N* of the optical fiber segments 530*ₙ* may be, e.g., between 2 and 100, more typically in a range from 3 to 20. The length of each of the optical fiber segments 530*ₙ* may be, e.g. in a range from about 10 km to about 120km. In an example implementation, the OAs 520 are rare-earth doped optical fiber amplifiers (OFAs), such as e.g. erbium-doped fiber amplifiers (EDFA).

The interrogating apparatus 510 may be an embodiment of the apparatus 100 or the apparatus 300 described above, with the interrogation light 501 including optical probe signals, e.g. 331, and load light, e.g. 111 and 121. In operation, the apparatus 510 launches the interrogation light 501 into the optical fiber line 581 for sequentially propagating along the *N* OFSs 530n in a forward direction, i.e., away from the apparatus 510, along the optical fiber line 581. Prior to entering each or at least some of the OFSs 530*ₙ*, the interrogation light 501 is suitably amplified by a corresponding one of the OAs 520, e.g. to compensate for optical losses in a preceding OFS 530ₙ₋₁.

Parts of the interrogation light 501 experience back-scattering and/or back-reflections in an OFSs 530n, giving rise to back-scattered light 531ₙ propagating along the OFS 530*ₙ* in a return direction, i.e. back towards the apparatus 510. The back-scattered light 531ₙ may be due to the Raleigh back-scattering on random fiber non-uniformities, or due to intentionally introduced back-reflectors, such as, e.g., fiber Bragg gratings (FBG), which may be incorporated into one or more of the OFS 530ₙ for the purpose of sensing.

The back-scattered light 531ₙ, or a selected part thereof 532ₙ, is transmitted back to the apparatus 510, e.g. via a return optical fiber (ROF) line 582, to be received at the apparatus 510 with the return light 585. The apparatus 510 is configured to process the return light 585 to obtain sensing data related, e.g., to environmental conditions along the optical fiber line 581.

In the illustrated embodiment, the optical fiber system 580 includes optical loop-back (OLB) paths 570ₙ, *n* =1,..., *N*, configured to cross-couple the selected parts 532₁, ..., 532_{N} of the back-scattered light 531₁, ..., 531*_{N}* from each segment of the "sensing" OF line 581 into the return OF line 582. Each of the OLB paths 570*ₙ* includes a de-coupler 573 located at or near an input end of the respective OFS 530*ₙ* to de-couple the corresponding back-scattered light 531ₙ from the OF line 581, and may further include an optional optical preamplifier 575. The first *(N-1)* of the OLB paths 570ₙ, *n* = 1,.., *N*-1, further includes an add-coupler 577ₙ configured to couple the back-scattered light 531*ₙ*, or a selected part 532*ₙ* thereof ("cross-coupled light 532*ₙ*"), into the return OF line 582 to propagate back toward the input 515 of the apparatus 510. The return OF line 582 may include a sequence of *(N-1)* return OFSs 560ₙ, *n* = 1,.., *N*-1, end-connected by OAs 540. The last OLB paths 570*_{N}* may not require an add-coupler 577 to couple the back-scattered light 531*_{N}* into the last OFS 560_{N-1} of the return OF line 582.

In an example implementation described below, the interrogating apparatus 510 is an embodiment of the apparatus 300, with the interrogating light 501 including the probe light 331 wavelength-multiplexed with the first load light 111 (load channel 113) and the second load light 121 (load channel 123). The optical signals of the probe light 331 are arranged into *N* wavelength-multiplexed probe channels Cₙ centered at the corresponding center wavelengths λₙ (optical frequencies v*ₙ*), e.g. as described above with reference to FIG. 3. The center wavelengths λₙ *n* =1,..., *N* may or may not be sequentially ordered in wavelength values.

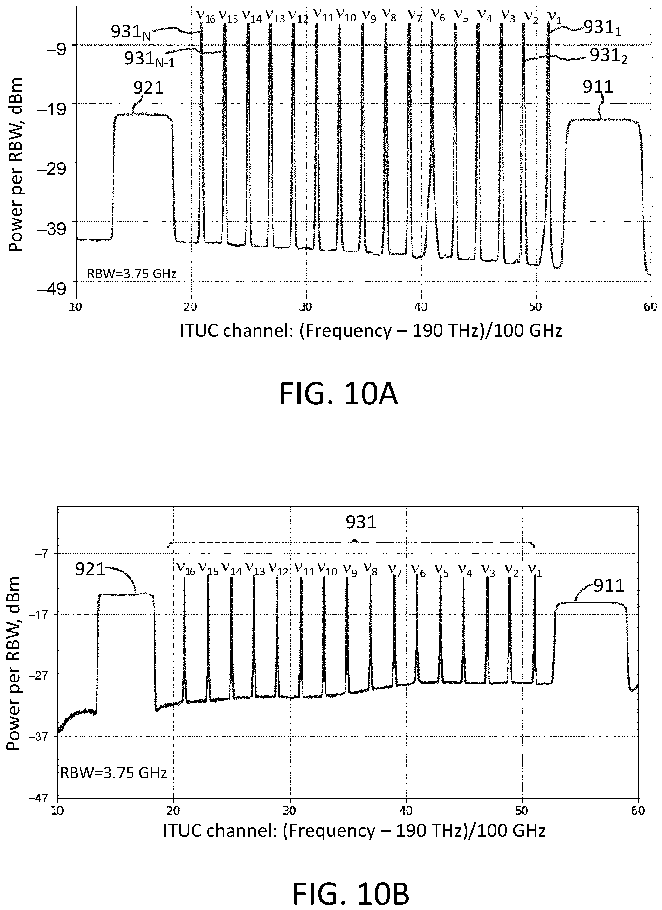

FIGs. 10A and 10B illustrate examples of typical time-averaged optical spectrum of the interrogation light 501 that may be used to interrogate a 16-span optical fiber system 580 (*N* = 16), at different points of the optical fiber system 580. FIG. 10A illustrates a typical time-averaged optical spectrum at an input of an OA 520 in the outbound OF line 581. FIG. 10B illustrates a time-averaged optical spectrum at an input of an OA 540 in the return OF line 582 in some embodiments, as described below. The optical frequency axes show the C-band ITU channel number, which is the offset from 190 THz in units of 100 GHz. In this example, the apparatus 510 is configured to output the interrogation light 501 comprising two load channels, 911 and 921, spectrally bounding a sequence of *N* = 16 probe channels 931₁, ..., 931₁₆ ("probe channels 931"). The probe channels 931 are examples of the probe channels Cₙ described above. They are centered close to every second ITUC channel from ITUC51 to ITUC21, i.e. with the probe channel spacing Δv≈ 200GHz. The center frequencies *vₙ* of the probe channels 931 in FIGs. 10A and 10B are indexed in an ascending order from v₁ to v₁₆. The shown spectrum correspond to a measurement by an optical spectrum analyzer (OSA) with a resolution bandwidth (RBW) that exceeds the bandwidth of an probe channel Cₙ, which may be e.g. about 80 MHz, but is smaller than the probe channel spacing and the bandwidth of each of the load channels, i.e. approximately 3.75 GHz in this example. The time averaged power of a channel can be calculated as the height of the corresponding channel peak, converted to power with unit mW, and multiplied by the RBW.

Referring back to FIG. 5, in the illustrated embodiment, at least the first (*N*-1) of the OLB paths 570ₙ are wavelength-selective, to select substantially only back-scattered light of the corresponding n-th probe channel *Cₙ* (e.g. one of the probe channels 931, FIG. 10A) to cross from the sensing OF line 581 into the return OF line 582, while substantially rejecting, or filtering out, the reminder of the back-scattered light 531*ₙ*. I.e., the part 532ₙ of the back-scattered light 531ₙ from the n-th OFS 530*ₙ* that is being cross-coupled into the return OF line 582 comprises predominantly the back-scattered light of the *n*-th probe channel Cₙ. In this way, each of the *N* OFS 530*ₙ* is interrogated using a corresponding probe channel *Cₙ*, with different probe channels *Cₙ* used to interrogate different ones of the OFSs 530*ₙ*.

In some embodiments, the last OLB path 570*_{N}* may include an optical filter 578 configured to selectively attenuate light in the probe channels *Cₙ*, *n* = 1,... *N* to increase the relative power of the load light relative to the back-reflected light of the probe channels *Cₙ* in the return OF line 582. In some embodiments, the optical filter 578 may be omitted, or may be configured to pass therethrough only one, or a subset of, the probe channels *Cₙ* and the load light, e.g. only the probe channel C_{N} and the load light, to propagate to the OAs 540 of the return OF line 582.

The de-couplers 573 may have different characteristics for light propagating along the optical fiber segment 530ₙ in the forward and return directions. The de-couplers 573 preferably allow all light propagating in the forward direction to pass therethrough, preferably with little or no attenuation, while re-directing ("dropping") at least part of the back-scattered light 531ₙ in the return direction along the corresponding OLB path 570*ₙ*. The de-couplers 573 may be embodied, for example, with backward-oriented directional couplers or, preferably, optical circulators. In some embodiments, a de-coupler 573 at an input of the n-th OFS 530*ₙ* may be wavelength-selective to predominantly re-direct, i.e. drop, the back-scattered light of the corresponding probe channel *Cₙ* (wavelengths λₙ).

The add-couplers 577ₙ may be wavelength-multiplexing to selectively add the back-scattered light of the corresponding probe channels Cₙ (wavelengths λₙ) to the return light propagating back toward the apparatus 510 along the return OF line 582. In a "through" path toward the apparatus 510 along the return OF line 582, the add-couplers 577ₙ may be configured to selectively block light of the probe channel *Cₙ* at wavelength λₙ, and to pass through toward the apparatus 510 the remaining (*N*-1) probe channels at the wavelengths λₘ ≠ λₙ, or at least all of the probe channels Cₘ with *m>n* that are coupled into the return OF line 582 upstream of the add-multiplexer 577*ₙ*. From an output of the add-multiplexer 577*ₙ*, the cross-coupled light signals 532*ₙ*, 532_{*n*+1}, ..., 532*_{N}* of the probe channels *Cₙ*, C_{*n*+1}, ..., *C_{N}* propagate toward the input port 515 of the interrogating apparatus 510.

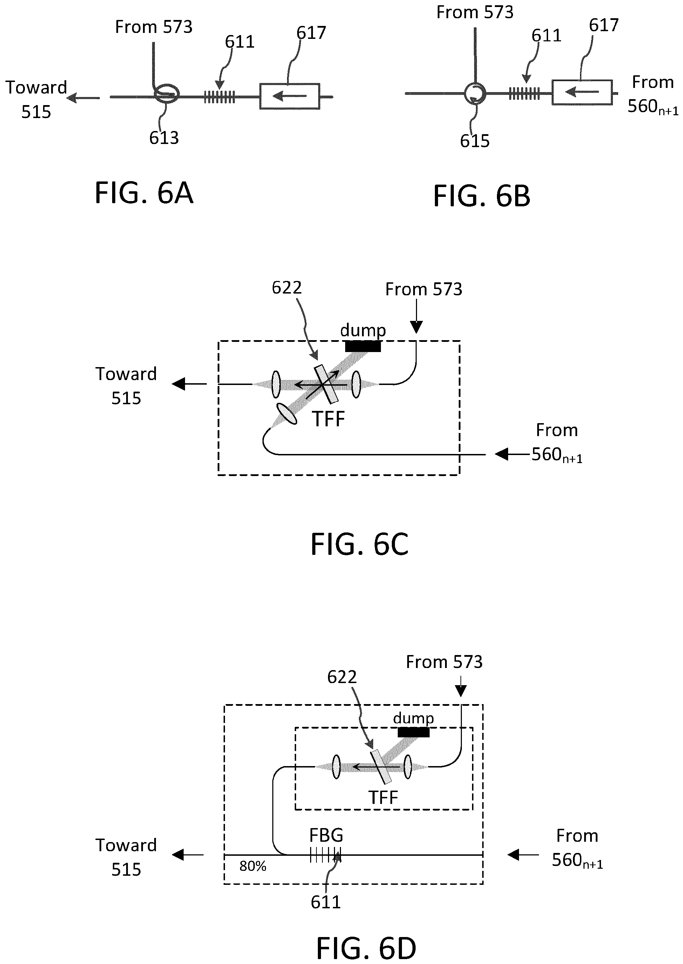

FIGs. 6A-6D illustrate example wavelength-selective implementations of an add-coupler 577n. In a first implementation shown in FIG. 6A, the add-coupler 577n includes a directional coupler 613 connecting to a fiber Bragg grating (FBG) 611 followed by an optical isolator 617 located in the return path upstream of the coupler 613. The FBG 611 is configured to selectively reflect light of the *n*-th probe channel *Cₙ* (wavelength λₙ) to propagate downstream the return path toward the apparatus 510, and to pass therethrough the remaining (*N*-1) probe channels Cₘ at the wavelengths λₘ ≠ λₙ. Thus, the directional coupler 613 and the FBG 611 cooperate to act as a selective add-drop coupler for the n-th wavelength channel *Cₙ*, selectively substituting light of the n-th probe channel *Cₙ* received from the optical fiber segment 530*ₙ* via OLB 570ₙ for any light of the n-th channel *Cₙ* that may be incident upon the FBG 611 in the downstream direction along the optical fiber segment 560ₙ. In some embodiments the optical isolator 617 may be omitted, at a potential expense of added noise on the sensing measurements due to sideband reflection from FBG 611 of not-selected channels *Cₘ*, *m≠n* or Rayleigh scattering of same channels upstream in the return OF line 582. Light propagating upstream in return OF line 582 that is not Rayleigh scattered or absorbed by fiber losses is eventually absorbed by an output port of the upstream OA 540, which typically includes an optical isolator. In some implementations, the directional coupler 613 may have an asymmetric coupling ratio, so that more than 50% of light in the return path propagates through the coupler toward the input 515 of the apparatus 510, and less than 50% of the light entering in the direction from the de-coupler 573 is coupled to propagate upstream the return path. By way of example, a 80/20 coupler may be used. The asymmetric coupling ratio of the coupler 613 reduces the transmission loss between two subsequent return-path OAs 540, at the expense of a somewhat higher gain of the optical preamplifier 575 in the optical loop-back path 570n. In this way the output power of the return-path OAs 540 can be reduced compared to an embodiment with a symmetric 50:50 coupler 513, thus reducing the nonlinear distortion in the return-path optical fiber segments 560*ₙ*. FIG. 6B illustrates an embodiment where the coupler 613 is replaced by a circulator 615.

It may be difficult to avoid FBG sidelobe losses in transmission, due to coupling to cladding modes. This can to some degree be mitigated by letting the channel frequency *vₙ* increase with increasing channel number *n*, i.e. with distance of the corresponding OF segment 530*ₙ* from the apparatus 510, since cladding losses always occur at frequencies above the FBG center frequency.

FIG. 6C illustrates an implementation of the add- coupler 577n, in which the FBG 611 is replaced with a thin-film filter (TFF) 622 having a passband that is smaller than the IF channel spacing Δv and is centered at the wavelength λₙ. The TFF 622 is configured to selectively pass towards the interrogation apparatus 510 light of the probe channel *Cₙ* received from the corresponding de-coupler 573, and light of the probe channels *Cₙ*, *m*>*n* (wavelength λₙ₊₁, ..., λ_{N}) received from an upstream OA 540 in the return path. An advantage of this configuration compared to that of FIG. 6A is a potentially reduced insertion loss. A potential disadvantage is a possibly poorer extinction, i.e. the suppression of the dropped wavelengths relative to the transmitted, which may lead to a crosstalk between sensing signals from different optical fiber spans 530.

FIG. 6D illustrates an implementation of the add-coupler 577*ₙ* combining the FBG 611 with the TFF 622. This implementation may be useful if the FBG 611 has poor sidelobe suppression in reflection. The TFF 622 may improve the extinction of not-selected channels *Cₘ*, *m≠n,* in the optical loopback path 570*ₙ* downstream of the optical preamplifier 575.

To facilitate the extraction of sensing information along each OFS 530*ₙ* from the return light 585, the optical power of the back-scattered light 532*ₙ* at the optical input 515 of the apparatus 510 should be sufficiently above noise, e.g. sufficiently above the shot noise limit and above the amplified spontaneous emission (ASE) generated by the OAs 520, 575, and 540 along the corresponding optical path. At the same time the level of non-linear distortions of the interrogation signal 501 along the OF line 581 should be sufficiently low to enable the extraction of useful sensing information at the apparatus 510. In the DOFS system 500 of FIG. 5, the OFSs 530*ₙ* function both as distributed optical sensing elements and optical relay elements to relay the interrogation light along the outbound OF line 581. In a system with more than just a few OA nodes, the accumulation of nonlinear distortions along the OF line 581 by the interrogation light 501 may complicate the sensing along those of the OFSs 530*ₙ* that are at the far end of the OF line 581.

FIG. 7 illustrates an example DOFS system 700 ("system 700") according to another embodiment. The DOFS system 700 illustrated in FIG. 7 is a modification of the DOFS system 500 and includes many of the same elements; elements that are common for the systems 500 and 700 are indicated in FIGs. 5 and 7 with same reference numerals and may not be further described. The system 700 differs from the system 500 by using different optical fibers for relaying the interrogation light 501 therealong (optical fibers 730ₙ) and for optical sensing (optical fibers 740ₙ).

In the illustrated embodiment, the system 700 includes the interrogating apparatus 510 that connects to an OF system 780, e.g. as described above with reference to the apparatus 510 and the OF system 580. The OF system 780 includes an OF line 781 comprising a sequence of *N* optical segments 750*ₙ*, *n* =1,..., *N*, which may generally be referred to herein as optical segments 750. Each, or at least some, of the optical segments 750. includes a relay optical fiber 730*ₙ* and a sensor optical fiber 740*ₙ*. The first, or input, ends of both the relay optical fiber 730*ₙ* and the sensor optical fiber 740*ₙ* are optically connected to a previous one of the optical segments 750 of the sequence, 750ₙ₋₁, or to an output 511 of the apparatus 510 for the first segment 750₁. A second, or output, end of the relay optical fiber 730*ₙ* is optically connected to an input of a subsequent one, i.e. 750ₙ₊₁, of the optical segments 750 of the sequence. The last segment 750*_{N}* may include only a sensor optical fiber 740_{N} connected to the second end of the relay optical fiber 730_{*N*-1} of the preceding optical segment 750_{N-1} via the last OA 520 in the sequence. The length of one segment 750 may be e.g. in a range from about 10 km to about 120 km, or from about 40 km to about 100 km, or as suitable for a particular application. In some embodiments, the length of the relay and sensor optical fibers of a same segment 750 may be about the same. In some embodiments, the length of the relay and sensor optical fibers of a same segment 750 may differ; e.g. they may not be located along each other. Some embodiments may include segments 750, e.g. those that are sufficiently short, where the relay optical fiber of the segment also serves as the sensor optical fiber of the segment, as described above with reference to FIG. 5.

The OF line 781 is configured to amplify light propagating therethrough. In the illustrated embodiment, the amplification is provided by the OAs 520, each embodied as a rare-earth doped OF A, such as an EDFA. In some embodiments, the OAs 520 may use Raman amplification in an optical fiber contained therein. In other embodiments, distributed Raman amplification along the relay optical fibers 730*ₙ* may be used; for such embodiments, the OAs 520 shown in FIG. 7 may symbolically represent such distributed Raman amplification in a corresponding relay optical fiber 730.

In the system 700, the OAs 520 are disposed to amplify the interrogation light 501 prior to launching thereof into both the relay optical fiber 730*ₙ* and the sensor optical fiber 740*ₙ* of the subsequent optical segment 750*ₙ*, e.g. using an optical splitter 772. A selected part 742*ₙ* of light 741*ₙ* that is back-scattered and/or back-reflected at different locations along the sensor optical fiber 740*ₙ* is cross-coupled into the return OF line 582 by an OLB path 770*ₙ*. Here, the selected part 742*ₙ* may be light of the *n*-th probe channel *Cₙ*. In the illustrated example, an OLB path 770*ₙ* may include an optical circulator 774, an optional optical preamplifier 522, and a wavelength-selective add-coupler 577*ₙ*. The wavelength-selective add-coupler 577*ₙ* may be embodied, e.g., as described above with reference to FIG. 5, and FIGs. 6A-6D. The optical circulator 774 is one embodiment of the de-coupler 573 described above, and may be replaced with a directional optical coupler, at a cost of a higher loss.

The optical splitter 772, e.g. a directional optical coupler, may have an asymmetric optical splitting ratio to direct relatively more light into the sensor optical fiber 740n than the relay optical fiber 730*ₙ*. In this way, nonlinear distortions of the interrogating light 501 in the OF line 781 may be controlled to an acceptable level, while at the same time sending enough light into the sensor optical fiber 740*ₙ* to obtain therefrom a sufficient amount of back-reflected light 742*ₙ* of the *n*-th probe channel C*ₙ*. An optimal value of the splitting ratio of the optical splitter 772 may depend on a particular implementation, e.g. on the length of the relay and sensor optical fibers 730*ₙ*, 740*ₙ*, on the fiber type, etc. Typically, the optical splitter 772 may be configured to couple into the sensor optical fiber 740*ₙ* at least 3 times, or at least 4 times, or preferably at least 5 times more optical power than into the relay optical fiber 730*ₙ*. As an example, in one embodiment the optical splitter 772 has a splitting ratio of 15:85. In other embodiments, the optical splitter 772 may be configured to direct at least as much, or more, optical power into the relay optical fiber 730*ₙ* than the sensor optical fiber 740*ₙ*. In such embodiments the fraction of probe light directed into the sensor optical fiber 740*ₙ* may be selectively amplified by a booster OA (not shown) connected between the optical splitter 772 and the sensor optical fiber 740*ₙ*.

Referring now to FIGs. 8A and 8B, the interrogating apparatus 510 of any of the systems 500 and 700 may be an embodiment of the apparatus 100 or the apparatus 300 described above that is configured to transmit within a transmission period *T* 803, *K* optical probe signals at a temporal series 801 of *K* corresponding (pulse) start times *t*₁, *t₂,* ..., *tₖ*, ... *t_{K}* ("start times *tₖ*"), so that different ones of the optical probe signals within the transmission period *T* are transmitted in different wavelength channels having different center wavelengths λₖ, e.g. different ones of the wavelength channels *Cₙ*, e.g. such as the wavelength channels 931ₙ of FIGs. 10A and 10B. In FIGs. 8A and 8B, the optical probe signals are indicated at 815 ("probe signals 815"), and shown schematically with dotted lines as optical pulses. Vertical offsets between different probe signals 815 in FIGs. 8A, 8B represent wavelength offsets between the center wavelengths thereof ("channel spacing"). In various embodiments, each of the probe signals 815 may be a single optical pulse or a sequence of optical pulses, together spanning a frequency band of a spectral width *B_{c}* that is much smaller than the frequency spacing Δv between adjacent ones of the wavelength channels.

The interrogating apparatus thus transmits, over a transmission period *T* 803, *K* optical probe signals 815 at *K* different center wavelengths λₖ, after which the transmission may be repeated with a repeat period *Tᵣ*; in this way, at each center wavelength λₖ the interrogator transmits a periodic sequence of optical probe signals 815 with the repeat period *Tᵣ* ("sampling period") equal or greater than the transmission period *T* of the pulse sequence. Here *Tᵣ* ≥ *T*=*K·*Δ*t,* where Δ*t* is the time delay between consecutive start times, and is the transmission duration of one optical probe signal 815. In the sown example, the transmission duration *tₚ* 810 of one optical probe signal 815 is smaller than the time delay Δ*t*, so that optical probe signals 815 of different wavelength channels transmitted at consecutive start times, e.g. *tₖ* and *t*_{*k*+1}*,* do not overlap. In some embodiments, optical probe signals 815 of different wavelength channels transmitted at consecutive start times may partially overlap in time, e.g. at edges thereof. In some embodiments, there may be an idle time Δ*T*= (*Tᵣ* - *T*) 807 between two consecutive transmission periods 803 when no probe light is being transmitted (FIG. 8A); in the example of FIG. 8A, the repeat period *Tᵣ* = *T*+Δ*T*.

In the example illustrated in FIGs. 8A and 8B, the number of different signal start times *tₖ* within the transmission period T 803 is six, i.e. *K* = 6, but may vary from 2 to 50, or 5 to 20 typically. Typically, the number *K* of the optical probe signals 815 transmitted over one transmission period *T* 803, and thus the number of spectrally separate wavelength channels in which the optical probe signals are transmitted, is equal to the number *N* of different optical fibers to be interrogated with the corresponding ones of the optical probe signals 815. For example, the *N* sensor optical fibers 740*ₙ* of the optical system 780 may be interrogated by cycling through *N* wavelength channels *Cₙ*, transmitting the optical probe signal 815 of each wavelength channel at a different one of the transmission start times *tₖ.* The optical transmitter, e.g. of the interrogator apparatus 510, may repeatedly cycle through the *N* wavelength channels *Cₙ* with a repeat period *Tᵣ* equal or greater than the transmission period 803 *T*.

In other embodiments, a same optical probe signal 815 may be used to interrogate two or more of the *N* sensor optical fibers 740*ₙ* of the optical system 780, so that the number *K* of the spectrally separate wavelength channels is smaller than *N.* The repeat period *Tᵣ* may be suitably extended to avoid temporal overlaps at the receiver of light of a same optical probe signal back-scattered in different optical fibers.

FIGs. 8A and 8B illustrate example implementations for interrogating six or more different optical fibers, e.g. six different optical fiber segments 530*ₙ* (FIG. 5) or six different sensor optical fibers 740*ₙ* (FIG. 7), by cycling through *N* = 6 wavelength channels over each transmission period *T* 803. In the example of FIG. 8A, the center wavelength of the optical probe signals 815 with successive start times *tₖ* increases step-wise over the duration of the transmission period 803. In a variation of this example, the center wavelength decreases step-wise over the duration of the transmission period 803. Such transmission scheme results in a relatively large wavelength shift of about (*N*-1)·Δλ at a juncture of consecutive transmission periods 803. Undesirably, an abrupt large wavelengths shift of probe light may cause undesired transient response of the OAs of the optical fiber line being interrogated, e.g. the OAs 520 of FIGs. 5 or 7. It may therefore be preferable to limit wavelength shifts between consecutive probe signals 815 to values that are much smaller than the OA gain bandwidth, e.g. less that ¼ thereof. Here, "abrupt" refers to changes that happen on a time scale comparable or faster than a gain relaxation time in the downstream OAs 520. The gain relaxation time for an EDFA may typically be in 5 - 10 µs.

In the example of FIG. 8B, the center wavelength of the optical probe signals 815 first increases, e.g. over approximately one half of the transmission period 803, and then decreases, e.g. over the other half of the transmission period 803. In a variation of this example, the center wavelength first decreases, and then increases over the duration of the transmission period 803. Such a scheme has a potential advantage of limiting abrupt wavelength shifts of the probe light both within and between the transmission period 803. A similar scheme that may also provide sufficient advantage by limiting abrupt wavelength shifts is one where the center wavelength of the transmission increases over ¼ of the transmission period then decreases over another ¼ of the same transmission period, then increases over another ¼ of the same transmission period, and finally increases over the last ¼ of the same transmission period,. In another example, the center wavelength of the transmission increases by stepping up through the "even" wavelength channels with the central wavelengths λ₂ₖ over about half of the transmission period T 803, and then, the center wavelength of the transmission decreases by stepping down through the "odd" wavelength channels with the central wavelengths λ₂ₖ₊₁ over the other half of the transmission period T 803, e.g. not exceed about 2Δλ. Both embodiments, with small wavelength changes between steps, are expected to result in a more stable operation of the downstream OAs, e.g. the OAs 520 of FIGs. 5 and 7.

FIG. 9A illustrates an example optical pulse sequence 900 of a probe light that may be generated by optical transmitter(s) of an OFI, such as e.g. the optical transmitter 130 or the optical transmitters of the OFI 340 or the interrogator apparatus 510, for interrogating sixteen optical fibers of an optical fiber line. Examples of the optical fiber line include 16-span implementations of the optical fiber line 581 of FIG. 5 or the optical fiber line 781 of FIG. 7 (*N* = 16). The optical pulse sequence 900 is transmitted over a transmission period *T* 910 at a temporal series of 16 start times spaced by a same time delay 901. Each consecutive pulse 903 has a different center wavelength than the preceding pulse, so that different pulses 903 of the sequence 900 are transmitted at different center wavelengths (different wavelength channels Cₙ). The pulse sequence 900 may be transmitted, e.g., by optical transmitters 410 of the corresponding CIs 330n, *n* =1, ..., 16, (FIGs. 3 and 4) transmitting in sequence one after another with a same time delay Δ*t* 901 in a time-synchronized fashion.

In FIG. 9A, each of the pulses 903 is labeled with a corresponding center wavelength thereof λ1, λ2, ..., λ16, with the center wavelengths here being numbered in a wavelength-increasing order, so that λ1< λ2 < λ3< ... < λ16. The probe light, e.g. 331, may include a periodic repetition of the pulse sequence 900 with a repeat period *Tᵣ* ≥ *T.* The optical transmitter(s) repeatedly cycle through the *N*=16 different center wavelengths transmitting in each cycle (each transmission period 910) the pulse sequence 900 of *N*=16 pulses, each pulse at a different wavelength, as illustrated in FIG. 9A.

In the illustrated example, the consecutive pulses 903 do not overlap in time, which eliminates or at least reduces nonlinear distortion of the pulses due to the four-wave mixing (FWM) in the optical fiber line being interrogated. Accordingly, both the wavelength and the optical power of the probe light varies in time, with the transmission wavelength abruptly changing and the optical power dropping at transitions between consecutive ones of the pulses 903.

When the pulse sequence 900 propagates in an amplified optical line, e.g. the OF line 163 of FIG. 1, the OF line 581 of FIG. 5, or the relay optical fibers 730*ₙ* of the OF line 781, the optical amplifiers thereof (e.g. the OAs 165 or 520) may react to the changes in the input optical power and/or wavelength by varying the amplifier gain, causing undesired transients, e.g. spikes and/or ripples, in the optical probe pulses at the amplifier output(s). These transients may grow in amplitude as the probe pulses propagate through a series of optical amplifiers, e.g. the OAs 520 of FIGs. 5 and 7.

In a typical embodiment, the downstream optical amplifiers are rare-earth doped OF As, e.g. EDFAs. The gain spectrum of an active medium (e.g. erbium-doped fiber) of an OFA is typically broad but varies significantly with wavelength on a scale of a few nanometers. Although such optical amplifiers typically include gain flattening filters (GFFs) to flatten a net gain spectrum of the optical amplifier over a target wavelength range, changes in the wavelength or power of the light being amplified may change the net gain experienced by the light being transmitted through the amplifier.

The gain of the downstream optical amplifiers, and the amplification of the probe pulses 903 therein, may be at least partially stabilized using the load channels 113, 123 spectrally located at both the short-wavelength side and long-wavelength side of the optical probe signal, e.g. as described above with reference to FIGs. 1 and 2, and by temporally varying the optical power of the load light at both sides of the probe signal spectrum so as to counteract changes in the optical probe signal. In the example illustrated in FIG. 9A, the center wavelength of the pulses 903 first increases, and then decreases over the duration of the transmission period 910 (~600 µs in this example); this limits the maximum wavelength shift at signal transitions. However, the overall wavelength variation of the probe light across the optical pulse sequence 900 may still have a significant effect on the OA gain spectrum.

Some embodiments may therefore use one or more channels of temporally varying load light in addition to the probe light to stabilize the gain of optical amplifiers in an optical fiber line being interrogated. E.g., the gain of the downstream optical amplifiers, and the amplification of the probe pulses 903 therein, may be at least partially stabilized using load channels spectrally located at both the short-wavelength side and long-wavelength side of the optical probe signal, e.g. as described above with reference to FIGs. 1 and 2, and by temporally varying the optical power of the load light at both sides of the probe signal spectrum so as to counteract changes in the optical probe signal.

FIG. 9B illustrates, for an example embodiment described above with reference to FIG. 9A and below with reference to FIGs. 10A, and 10B, the modulation of load light in load light channels 911 and 921 synchronized to the pulse sequence 900 of FIG. 7A. The load light channels 911 and 921 are spectrally located at opposite sides of the entire spectrum of the probe channels 931, as illustrated in FIGs. 10A and 10B. The load light channels 911 and 921 are examples of the load light channels 113, 123 described above with reference to FIGs. 1 and 2. The horizontal (time) axes in FIGs. 9A and 9B are aligned to illustrate temporal variations happening synchronously in the probe channels (FIG. 9A) and the load channels (FIG. 9B). The load light of the load channels 911, 921 is injected into an optical fiber line, e.g. 581 or 781, together with the probe pulse sequence 900 to stabilize the gain of downstream optical amplifiers, e.g. OAs 540 (FIGs. 5 and 7).

FIGs. 10A and 10B schematically illustrate example time-averaged spectra of the interrogation light 501 of the apparatus 510 that is configured to interrogate a sixteen-segment implementation of the OF line 581 of the optical system 590 of FIG. 5, or 16 sensor optical fibers 740*ₙ* the OF line 781 of the optical system 780 of FIG. 7 with *N* = 16. The spectrum shown in FIG. 10A is a typical time-averaged spectrum of the interrogation light 501 at an input to, e.g., one of the optical relay fibers 730*ₙ*. FIG. 9B shows a typical time-averaged spectrum at an input to one of optical fiber segments 560*ₙ*, i.e. the output one of the OAs 540 in the ROF line 582, for an example configuration of the OLB path 570*_{N}* or 770_{N} described below.

Spectral lines 931₁, 931₂, ..., 931_{N} represent the spectrum of the probe pulse sequence 900 of FIG. 9A; they correspond to the sixteen wavelength channels Cₙ of the probe light, with the respective central frequencies v₁, v₂, ... , v₁₆ (wavelengths λ₁, λ₂, ... , λ₁₆ in FIG. 9A), and may be referred to as the wavelength channels 931 of the probe light, or the probe channels 931. In this example, the wavelength channels 931 of the probe light are approximately aligned with the C-band ITU frequency grid, and are spaced by approximately 200GHz. The frequency spacing of the probe channels *Cₙ* may be somewhat uneven to reduce four-wave mixing. Load light in a first load channel 911 includes wavelengths that are smaller than any of the center wavelengths λ*ₙ*=c/v*ₙ* of the optical probe light. Load light in a second load channel 921 includes wavelengths that are greater than any of the wavelengths of the probe channels 931₁, 931₂, ..., 931_{N}. In some embodiments, e.g. where the load light experiences random back-scattering in the sensor optical fibers and is transmitted over the return OF line 582, the spectral width of each load channel 911 and 921 preferably exceeds the spacing Δλ between adjacent ones of the central wavelengths λₙ of the probe channels 931, which tends to reduce the spectral density of random intensity fluctuations in bandwidth-limited white light load signals. The large spectral width of the load channels 911, 921 may be advantageous for reducing XPM and XPolM of the optical probe signals by variations of the load light power, both in the outbound OF line 581, 781 and the return OF line 582, 782. In the illustrated embodiment, the spectral width of each load light channel 911, 921 exceeds 2Δλ.

In some embodiments, one of the load channels 911 and 921, e.g. the short-wavelength load channel 911, is located around a wavelength corresponding to a maximum gain of the active optical fiber of the downstream OF As within an operating bandwidth of the OF As (e.g. OAs 520 in FIGs. 5 and 7). The other of the load channels 911 and 921, e.g. the long-wavelength load channel 921, may be centered at a wavelength corresponding to a minimum gain of the rare-earth doped optical fiber of the downstream OF As within the same operating bandwidth. This may correspond to centering the load light channels 911, 921 approximately at the maximum loss and the minimum loss of the GFF used in the OF As. The active optical fiber may be e.g. a rare-earth doped optical fiber of the OF A, typically the erbium-doped fiber (EDF). The operating bandwidth is a spectral bandwidth that comprises all channels of the probe light and the load light channels. The spectral profile of the active fiber gain spanning the operating bandwidth may be measured, e.g., using a source of white light, with a same input optical power and a same pump power as expected during normal operation of the OFA(s).

Referring now back to FIG. 9B, the figure shows temporal variations of the load light power in the short-wavelength load channel 911 (solid line) and in the long-wavelength load channel 921 (dashed line). The load light of the load channels 911, 921 is injected into an optical fiber line, e.g. the OF line 581 of FIG. 5 or 781 of FIG. 7, together with the optical pulse sequence 900 to stabilize the gain of downstream optical amplifiers, e.g. OAs 520 (FIGs. 5, 7). The optical power in the load light channels 911, 921 varies in time in synchronization with the pulse sequence 900 of FIG. 9A, to counteract the effect of probe light power and wavelength variations during the pulse sequence 900 in FIG. 9A on downstream optical amplifiers of the outbound optical fiber line, e.g. the OAs 520.

The optical power of both the first (911) and second (921) load light channels briefly rises in-between consecutive probe pulses 903, so as to at least partially compensate the effect of a drop in the power of the probe light on the gain of the downstream optical amplifiers, e.g. the OAs 520 in FIGs. 5, 7. In FIG. 9B, this is manifested by load light peaking 922 in-between the probe pulses 903, when the total optical power of the probe light drops. In some embodiments the load light peaking 922 at transitions between consecutive probe pulses may be absent, e.g. if the consecutive probe pulses overlap at the edges so that the drops in the optical power of the probe light at pulse-to-pulse transitions are absent or small.

Furthermore, the optical powers of the two load channels 911 and 921 change in opposite directions after a change in the center wavelength λₙ of probe light transmission, e.g. in a middle portion of a subsequent pulse 903 after the peaking 922 (if present) at pulse to pulse transitions; changing the optical powers of the two load channels 911 and 921 in opposite directions responsive to a (step-wise) change in the transmission center wavelength λₙ may at least partially counteract the effect of changing the center wavelength λₙ of the probe light upon the gain spectrum G(λ) of the downstream OAs 520. In the example illustrated in FIGs. 9A and 9B, during a first half of the transmission period 910, when the center wavelength of the probe light increases from pulse to pulse, the "mid-pulse" optical power in the first load channel 911 (the short-wavelength side of the spectrum) increases, while the "mid-pulse" light power in the second load channel 921 (the long-wavelength side of the spectrum) decreases. During the second half of the transmission period 910, as the wavelength of the probe light decreases, the "mid-pulse" power of the first load channel 911 decreases, while the "mid-pulse" power of the second load channel 921 increases.

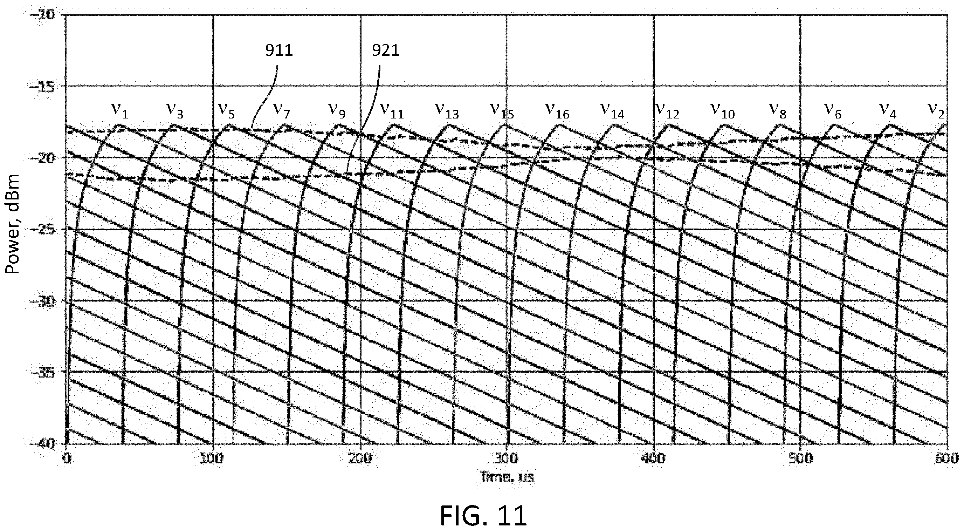

FIG. 11 shows, for the example described above with reference to FIGs. 9A-10B, a typical evolution of optical power that is expected to be returned back to the apparatus 510 in different ones of the probe channels 931 due to the Raleigh back-scattering in, e.g., the sensor optical fibers 740*ₙ*. The Raleigh scattering is a random process, and the power of the scattered light will generally fluctuate, e.g. around the values plotted for the illustrated example. FIG. 11 shows the expectation values (mean values) of the optical power of the return light in each probe channel Cₙ (spectral lines 931 in FIGs. 10A. 10B); actual signal power of the back-scattered light may fluctuate with a standard deviation that is comparable to the mean value (typically about one half thereof), and with a bandwidth equal to the optical bandwidth of the optical probe signal in the channel. These fluctuations may add some undesired SPM-induced phase noise into the response optical signal 585. In order to keep SPM-induced phase noise in the return OF line 582 to an acceptable level, the peak expectation value of the optical power of the back-scattered light in each probe channel at the output of a return-path OA 540 should be limited, e.g. preferably to about 0.3 mW or less in some typical embodiments. By way of example, for a 60 km long sensor optical fiber and a 600 µs sampling period, this corresponds to a time average per probe channel Cₙ less than about (-12) dBm, or less than about 0 (zero) dBm summed over all 16 probe channels 931 in this example.

Typically, an EDFA operating with an output power of less than 0 dBm will operate in an unsaturated regime where the gain has little dependence on the input optical power. This may be especially the case when the pump power is high, which may be desirable in order to achieve a low noise figure operation. It may be advantageous to operate the return-path OAs 540 in the saturated regime, since this will tend to stabilize the optical power of the return light as it propagates. In some implementations, operation of the return-path OAs 540 in the saturated regime may be achieved, e.g., by increasing the light power in at least one of the load channels 911, 921, or in a different load channel that may be unmodulated.

In some implementations, the OF system 580 or 780 is configured to have a higher ratio between the load light power and the probe signal power in the return OF line 582 than in the outbound OF line 581 or 781; see e.g. FIGs. 10A and 10B, where the ratio of the optical power in the probe channels 931 to the optical power in the load channels 911, 921 is different. Such operation may be achieved, e.g., using the filter 578, which may have different, e.g. greater, attenuation for the probe channels than the load channels.

E.g., in the example illustrated in FIG. 10B, the mean power of each probe channel 931 at the output from the first return-path OA 540 of the ROF line 582 is about -12 dBm, as suggested above, while the load channels 911, 921 carry about 7 dBm each. At the output of the last splitter 772 of the OF line 781 (the relay line output, which may be terminated and not in use), the mean power of each probe channel is greater, i.e. about -5.1 dBm, while the load channels 911, 921 are lower in power, about 0.5 dBm each (FIG. 9A).

In some implementations, the last, i.e. *N*-th, OLB path, e.g. 570*_{N}* or 770_{N}, may be configured to block light in some or all of the probe channels from C₁ to C_{N-1} from entering the ROF line 232.

In the example configurations of the OF systems 580 and 780 described above with reference to FIGs. 5 and 7, light of the load channels, e.g. 911 and 921, when present at the input to the OF line 581 or 781, will be coupled into the sensing optical fibers, e.g. 530ₙ or 740*ₙ*, giving rise to the Rayleigh back-scattered load light directed along the corresponding OLB path, e.g., 570ₙ or 770ₙ. Similar to the backscattered light of the probe channels, the Rayleigh back-scattered load light has intensity noise distributed over the bandwidths of the respective load channels 911, 921. This intensity noise of the back-scattered load light may cause phase and polarization noise on the back-scattered light in the probe channels 731 through XPM and XPolM. The group delay dispersion may cause some of this noisy modulation to be averaged out, since the load light and the optical probe signals travel at different speeds through the ROF line 582. Signal in the probe channels that are spectrally close to the load channels may still be affected. The degradation of the back-reflected optical probe signals in the return OF line 582, e.g. the back-reflected light of the optical probe signals 815 or 903 (FIGs. 8 and 9A), due to the cross-modulation with the noisy load light may be reduced by increasing the load channel bandwidth to be much greater than the probe signal bandwidth *B_{c}*, preferably to be greater than the probe channel spacing Δv, thus spreading much of the cross-modulation intensity noise to frequencies that are outside of the detection bandwidth used in the optical receiver of the interrogating apparatus. In experiments where the probe signal full-width-half-maximum bandwidth was 80 MHz we have observed no measurable degradation with the 500 to 600 GHz load bandwidth shown in FIGs. 9A and 9B.

In some embodiments of the DOFS system of FIG. 7, one or more of the OLB paths 770*ₙ* may be configured to cause light of one or more of the load channels to bypass one or more of the sensor optical fibers 740*ₙ*, and to enter the return OF line 532. This may avoid the XPM and/or XPolM of the probe channel signals in the ROF line 582 by the Raleigh back-scattering induced intensity noise of the load light. In such embodiments, the bandwidth of the load channels that bypass the sensor optical fibers 740*ₙ* may be smaller, e.g. less than the probe channel spacing, thereby reducing requirements to the total OA bandwidth. In some embodiments, the load light spectrum may be broadened to suppress stimulated Brillouin scattering, e.g., by applying phase modulation with a moderate bandwidth (typically between 50 and 1000 MHz). In some implementations, the load channel(s) that stabilize(s) the gain of the OAs of the outbound OF line 781 may be different from the load channel(s) that stabilize(s) the gain of the OAs in the return OF line 582, and may lack intensity modulation by the OFI.

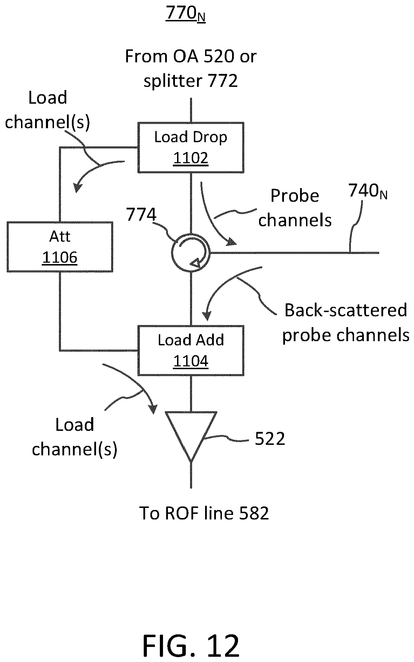

As illustrated in FIG. 12, in some embodiments load light is separated from the probe pulses in the last OLB path 570_{_N} or 770_{N} with a wavelength-selective drop filter 1102 located upstream of the circulator 774 (or the last de-coupler 573 of the OF line 531 of FIG, 5) to bypass the sensor optical fiber 740*_{N}*, and rejoined with the back-reflected probe signals by a wavelength-selective add filter 1104, preferably before the input to the optical preamplifier 552. In some embodiments, the load light bypassing the circulator 774 may be suitably attenuated with an optical attenuator 1106. Similarly, in the optical fiber system 580 of FIG. 5, light of the corresponding load channels may be separated from the probe pulses and, possibly, from other modulated load light, to bypass the last de-coupler 573 and the optical fiber segment 530_{N} of the OF line 531 of FIG. 5 to enter the OLB path 570*_{N}*.

In some embodiments, the OLB path 770_{N} or 570_{N} may be configured to selectively block light of one or more load channels to prevent said light from entering the ROF line 582., e.g. using wavelength filtering somewhere along the OLB path 770_{N} or at the output of the nearest upstream OA 520. The load channel(s) being blocked may include, e.g. those of the load channels that are modulated to stabilize the gain of the OAs 520 of the OOF line 781.

In some embodiments an OFI, e.g. the OFI 340, may be configured to output a temporally ordered set of optical probe pulses of different wavelength channels (channel center wavelengths λ*ₙ*, channel frequencies *vₙ*=c/_λ*ₙ*), wherein consecutive probe pulses of the sequence temporally overlap at the edges. Here, "consecutive" refers to two pulses with consecutive transmission start times, (smallest non-zero time delay).

Once all *N* probe wavelength channels of the OFI are cycled through, the pulse sequence 1200 of the optical probe pulses 1201 is repeated. In this example, the transmission time delay Δ*t* 1203 between the consecutive optical probe pulses 1201 is somewhat smaller than the duration *tₚ* 1205 of each optical probe pulse 1201. This is in contrast with the pulse sequence 900 of FIG. 9A, where the duration of each pulse 903 does not exceed the pulse-to-pulse time delay 901.

In a preferred embodiment the optical probe pulses 1201 are suitably apodized, with the pulse shape and the transmission time delay 1203 selected to keep the optical power of the pulse sequence 1200 approximately constant during the transmission of the pulse sequence, or at least half of a repeat period of the transmission. Here, "approximately constant" means that variations of the optical power of the probe light, time-averaged over a window of at least 10 µsec, is within +\- 30%, or preferably within +\- 10% , of a mean value thereof. Avoiding power dips at transitions between consecutive pulses 1201 may simplify managing the gain dynamics of the OAs 520 of FIGs. 5 and 7. A pulse apodization time, i.e. the duration of the rising and falling edges of the probe pulse ("on/off transition times") may be relatively small, so as to reduce the overlaps between probe pulses of different wavelengths and thus to lessen the FWM. By way of example, the on/off transition times of a probe pulse may each be less than about 2 µsec, or preferably less than about 0.2 µsec. Very short apodization times may lead to the appearance of undesired side-lobes in the compressed signal at the output of the matched-filter processing. In some implementations, the OFI may be configured to correspondingly apodize the matched-filter impulse response used for the chirp compression, and/or to increase a chirp rate at the start and the end of the pulse, as described above with reference to FIG. 4. These measures may lessen the magnitude of the undesired side-lobes.

In some implementations, the optical probe pulses 1201 of different wavelength channels may be time-ordered such that the wavelength change at pulse-to-pulse transitions is minimized; this can for instance be achieved by ordering the channel frequencies vₙ of consecutive pulses 1201 to monotonically step in a same direction, e.g. from high to low or from low to high, throughout the pulse sequence. Such ordering may reduce OA-induced distortions of the pulse shape for most of the probe pulses as they propagate in the OF line being interrogated (e.g. the OF line 581 or 781), as reducing a wavelength change of input light tend to reduce changes in the steady-state spectral gain profile in the active (rare-earth doped) optical fibers of the OAs 520. Some OA gain instability may however occur when stepping from the end of one such pulse sequence to the start of the next pulse sequence. In some implementations, this may be mitigated, e.g., by adding some "idle" time between consecutive ones of the pulse sequences when no probe light is transmitted, e.g. as illustrated at 807 in FIG. 8A, and transmitting during this idle time, e.g. 807, a corresponding amount of optical power in a load light channel. This load light channel may be spectrally close to, but still separate from, the wavelength channel of the first probe pulse in the sequence. In another implementation, the OFI may be configured to step through, e.g., the odd numbered probe channels in sequence for a first half of the pulse sequence, followed by the even numbered probe channels in the opposite direction, as it illustrated in FIG. 8B. Here, the channels are assumed to be numbered sequentially in the direction of increasing channel wavelength or channel frequency.

Note that at least some of the features described above with reference to specific examples of DOFS systems can also be used in optical systems that differ in some aspects from the ones described above. Such other DOFS systems include, for instance, various distributed sensing systems that use pulsed or intensity modulated interrogation light to interrogate optical fibers, such as but not limited to Raman DTS systems, distributed Brillouin sensing systems, pulsed OTDR systems, pulsed interferometer interrogation systems, pulsed FBG interrogation systems. E.g., all of the above DOFS systems may be configured to use amplified multi-segment relay optical lines with separate sensor optical fibers coupled to at least some of the relay fiber segments.

Furthermore, at least some of the features described above with reference to specific examples of DOFS systems may be used in long-haul submarine telecom systems. E.g. DAS can be added for submarine telecom cable threat monitoring by dedicating a separate fiber pair for DAS to establish a surveillance system that generates early warnings if a potential threat is detected in the vicinity of the submarine telecom cable. Dedicated submarine DAS sensing cables may also be installed alongside, or piggybacked to electricity power cables, or seabed hydrocarbon carrying pipelines, for, e.g., detection and localization of leaks or electrical faults, and/or for cable or pipeline threat monitoring. The DAS sensing capabilities of such a system can also contribute to the SMART cables initiative where environmental sensing in introduced to submarine telecom systems for oceanographic and climate research objectives. In this respect, DAS can contribute with oceanographic observations on mammals, earthquakes, tsunamis, temperature or strain fluctuations etc.

Various features of the distributed optical fiber sensors described above with reference to specific examples may be used, e.g., inside telecom cables on a dedicated fiber pair or alternatively constitute a dedicated cable system for the sole purpose of sensing.

An example embodiment described above, e.g. in the summary section and with reference to any one or more of the FIGs. 1-12, provides an apparatus. The apparatus comprises: an optical interrogator (e.g. 100, 300, 510) for distributed optical fiber sensing comprising an optical transmitter (e.g. 130), an optical receiver (e.g. 140), and first and second load light sources (e.g. 110, 120; 310, 320). The load light sources are connected to transmit temporally varying load light to an optical output (e.g. 101, 301, 511) of the optical interrogator. The optical transmitter (e.g. 130) is connected to transmit optical probe signals (e.g. 131, 331, 401, 815, 903) to the same optical output (e.g. 101, 301, 511) such that the temporally varying load light from the first load light source (e.g. 110) occupies a wavelength range (e.g. 113; 911) on an opposite side of a wavelength range (e.g. 133; 931) of the optical probe light as the temporally varying load light from the second load light source (e.g. 120, wavelength range 123 or 921). Wavelengths of the temporally varying load light are in an amplification range for rare-earth doped amplifiers.

In some implementations, the optical transmitter (e.g. 130) is configured to transmit the optical probe signals at a temporal series (e.g. 801) of start times *tₖ*, such that the optical probe signals (e.g. 815, 903) transmitted at different start times of the temporal series have different center wavelengths. In some implementations, the center wavelengths of the optical probe signals (e.g. 815, 903) transmitted at different ones of the start times have a spectral spacing, the spectral spacing being smaller than a spectral bandwidth of the temporally varying load light from either of the load light sources. In some of the above implementations, the optical probe signals (e.g. 815, 903) having different center wavelengths do not overlap in time. In some of the above implementations, the optical probe signals (e.g. 815, 903) having different center wavelengths partially overlap in time.

In any of the above implementations, at least one of the load light sources (e.g. 120 and/or 130; 320 and/or 330) may be configured to output the load light therefrom with intensity peaks (e.g. 922) between consecutive ones of the optical probe signals (e.g. 903).

In any of the above implementations, the optical interrogator is such that intensities of the load light output by the first and second load light sources are changed in opposite directions by a change to a different one of the center wavelengths during transmission of the optical probe signals.

Any of the above implementations may further comprise an optical fiber line (e.g. 163, 581, 781) having a series of optical fiber segments (e.g. 530, 730) connected to the output of the optical interrogator, the optical fiber segments being end-connected by optical amplifiers (e.g. 165, 520). In some of such implementations, at least some of the optical amplifiers may be rare-earth doped optical fiber amplifiers. The optical receiver (e.g. 140) may be connected (e.g. via 570, 770) to obtain back-scattered light from at least some of the optical fiber segments.

Any of the above implementations may further comprise a return optical fiber line (e.g. 582, FIGs. 5 and 7) optically connected to return light back scattered by the optical fiber segments to the optical receiver, the return optical fiber line comprising a sequence of optical fibers (e.g. 560) end connected by rare-earth doped optical amplifiers (e.g. 540).

In any of the above implementations, the bandwidth of load light (e.g. 111, 121) output by each load light source (e.g. 110, 120) may be larger than the bandwidth of individual ones of the optical probe signals (e.g. 131).

In any of the above implementations, each of the load light sources (e.g. 310, 320) may include a bandpass filtered white light source (e.g. 307).

In any of the above implementations, the optical interrogator may be configured for distributed acoustic sensing along a plurality of optical fibers (e.g. 530; 740).

While this disclosure includes references to illustrative embodiments, this specification is not intended to be construed in a limiting sense, and various modifications of the described embodiments will be evident to those skilled in the art based on the present specification. For example, some embodiments may include more than two load channels with temporally varying load light; e.g. a third load channel may be added spectrally between the first and second load channels to define two separate wavelength ranges for the OFI signal channels. Some embodiments may include only one load channel. Furthermore, other optical couplers may be used instead of circulators 774 to extract back-reflected light from optical fibers in the example OF system described above. Also, a circulator may be used instead of a directional optical coupler in the add-couplers 577. Either multi-stage or single-stage optical amplifiers may be used for the OAs 165, 520, 575, 540. Furthermore, one or more of the OAs 165, 520, 575, 540 may be implemented using Raman amplification in the optical fibers 530, 730, 560 of the outbound and return OF lines, or using discrete Raman amplifiers where the amplifying fiber is contained within the amplifier unit, or with SOAs. In some embodiments, one or more of the OAs 165, 520, 575, 540 may be implemented using semiconductor amplifiers (SA). Extra amplifiers may be added in certain paths, for instance in the path between the output of a return-path OA 540 and a downstream add-coupler 577. In some embodiments, one or more optical splitters 772 may branch out to multiple sensor fibers, potentially measuring different quantities and/or at different locations, where the backscatter of at least one channel from each sensor fiber is amplified and added into the ROF line 582. In some embodiments some of the splitters 772 may be a drop filter. In some embodiments some of the elements 573, 772, 577 may be grating-assisted add/drop couplers. Various other modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

## Claims

1. An apparatus, comprising:
an optical interrogator for distributed optical fiber sensing comprising an optical transmitter, an optical receiver, and first and second load light sources; and
wherein the load light sources are connected to transmit temporally varying load light to an optical output of the device;
wherein the optical transmitter is connected to transmit optical probe signals to the optical output such that the temporally varying load light from the first load light source occupies a wavelength range on an opposite side of a wavelength range of the optical probe signals as the temporally varying load light from the second load light source; and
wherein wavelengths of the temporally varying load light are in an amplification range for rare-earth doped amplifiers.

2. The apparatus of claim 1, wherein the optical transmitter is configured to transmit the optical probe signals at a temporal series of start times, such that the optical probe signals transmitted at different start times of the temporal series have different center wavelengths.

3. The apparatus of claim 2, wherein the center wavelengths of the optical probe signals transmitted at different ones of the start times have a spectral spacing, the spectral spacing being smaller than a spectral bandwidth of the temporally varying load light from either of the load light sources.

4. The apparatus of claim 2 or 3, wherein the optical probe signals having different center wavelengths do not overlap in time.

5. The apparatus of claim 2 or 3, wherein the optical probe signals transmitted at consecutive ones of the start times partially overlap in time.

6. The apparatus of any of claims 2-4, wherein at least one of the load light sources is configured to output the load light therefrom with intensity peaks between consecutive ones of the optical probe signals.

7. The apparatus of any one of claims 1 to 6, wherein the optical interrogator is such that intensities of the load light output by the first and second load light sources are changed in opposite directions by a change to a different one of the center wavelengths during transmission of the optical probe signals.

8. The apparatus of any one of claims 1-7, further comprising an optical fiber line having a series of optical fiber segments connected to the output of the optical interrogator, the optical fiber segments being end-connected by optical amplifiers.

9. The apparatus of claim 8, wherein at least some of the optical amplifiers are rare-earth doped optical fiber amplifiers.

10. The apparatus of claim 8 or 9, wherein the optical receiver is connected to obtain back-scattered light from at least some of the optical fiber segments.

11. The apparatus of any one of claims 8 to 10, further comprising a return optical fiber line optically connected to return light back scattered by the optical fiber segments to the optical receiver, the return optical fiber line comprising a sequence of optical fibers end connected by rare-earth doped optical amplifiers.

12. The apparatus of any of claims 1 - 10, wherein the bandwidth of load light output by each load light source is larger than the bandwidth of individual ones of the optical probe signals.

13. The apparatus of any one of claims 1 to 11, wherein each of the load light sources includes a bandpass filtered white light source.

14. The apparatus of any one of claims 1 to 13 wherein the optical interrogator is configured for distributed acoustic sensing along a plurality of optical fibers.
